# EUROPÄISCHE PATENTSCHRIFT

(11) **EP 4 286 595 B1**
(45) Veröffentlichungstag und Bekanntmachung des Hinweises auf die Patenterteilung: **16.07.2025**
(21) Anmeldenummer: 23166711.4
(22) Anmeldetag: 05.04.2023
(51) Int. Cl.: E02D 29/12, H02G 9/10

(54) **SCHACHT**
SHAFT
PUITS

(30) Priorität: 03.06.2022 DE 102022114116
(43) Veröffentlichungstag der Anmeldung: 06.12.2023
(73) Patentinhaber: Langmatz GmbH, 82467 Garmisch-Partenkirchen (DE)
(72) Erfinder: Jais, Stefan, 82481 Mittenwald (DE); Straßberger, Thomas, 82491 Grainau (DE); Hein, Franziska, 82467 Garmisch-Partenkirchen (DE)
(74) Vertreter: Flosdorff, Jürgen

(56) Entgegenhaltungen:
- EP-A1- 1 587 199
- DE-A1- 102011 116 874
- DE-B3- 10 314 897
- DE-U1- 202007 014 465

## Beschreibung

Die Erfindung betrifft einen Schacht, dessen Schachtwände aus aufeinander aufgesetzten Wandelementen bestehen, die im Spritzgussverfahren hergestellt sind. Meist werden zwei oder drei Reihen von Wandelementen übereinander angeordnet, wobei der obere Abschluss der so gebildeten Schachtwände einen Stahlrahmen aus einem umlaufenden Rechteckprofil aufweist, auf dem ein oder mehrere Schachtdeckel angeordnet werden, die von einem außen an dem Stahlrahmen befestigten Flachstahl umgeben sind. Ein gattungsentsprechender Schacht ist beispielhaft in der DE 103 14 897 B3 oder auch in der EP 1 587 199 A1 beschrieben. Die Oberkante des Flachstahls und die Oberseite des oder der Schachtdeckel müssen auf derselben Höhe wie die Umgebung des Schachtes liegen. Hierzu ist es bekannt, dass sich der Stahlrahmen auf Spindeln abstützen kann, deren Länge so eingestellt wird, dass der oder die Schachtdeckel auf Umgebungsniveau liegen.

Da der oder die Schachtdeckel je nach Einbauort großen mechanischen Belastungen aus Kraftfahrzeugverkehr ausgesetzt sein können, muss der obere Abschluss des Schachtes eine ausreichend große Stabilität aufweisen.

Der vorliegenden Erfindung liegt die Aufgabe zugrunde, einen Schacht anzugeben, bei dem der obere Abschluss schnell und einfach zu montieren ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass auf der Oberseite der Schachtwände ein Kopfrahmen aufliegt, der durch Klemm-Mittel und/oder Rastmittel auf den Schachtwänden fixiert ist, und dass der Stahlrahmen entweder direkt auf dem Kopfrahmen oder auf einer auf dem Kopfrahmen angeordneten, unterfütternden Mörtelschicht aufliegt. Bei dieser Ausbildung ist der Kopfrahmen ohne Zuhilfenahme von Werkzeugen auf einfache Weise zu montieren, wobei dennoch gewährleistet ist, dass der Kopfrahmen bei allen auftretenden Belastungen unverschieblich auf den Schachtwänden gehalten ist. Der Stahlrahmen liegt dabei entweder auf dem Kopfrahmen auf oder auf einer auf dem Kopfrahmen angeordneten, unterfütternden Mörtelschicht, wenn der Stahlrahmen mit Hilfe von ausgefahrenen Spindeln angehoben ist.

Der Kopfrahmen ist bevorzugt im Spritzgussverfahren aus Kunststoff, vorzugsweise aus PC, hergestellt.

Des weiteren ist vorgesehen, dass der Kopfrahmen aus mehreren Kopfrahmenteilen zusammengesetzt ist. Nachdem der Schacht eine rechteckige Form hat, besteht der Kopfrahmen aus vier Kopfrahmenteilen, die an den Ecken des Schachtes aneinander anliegen oder ineinander eingreifen, nachdem die Kopfrahmenteile auf den Schachtwänden befestigt sind.

Hierzu wird mit besonderem Vorteil vorgeschlagen, dass die Kopfrahmenteile an einem seitlichen Randabschnitt, bevorzugt an dem äußeren Randabschnitt, als Klemm-Mittel Haken aufweisen, die in die Schachtwände eingeschoben werden, um den Kopfrahmen auf den Schachtwänden zu positionieren. Die Haken können einstückig mit den Kopfrahmenteilen ausgebildet oder auf jede zweckmäßige Weise an den Kopfrahmenteilen kraftschlüssig befestigt sein. Die auf diese Weise positionierten Kopfrahmenteile sind an den Ecken zu einem geschlossenen Kopfrahmen zusammengesetzt.

Nach einem weiteren Vorschlag haben die Kopfrahmenteile an den gegenüber liegenden seitlichen Rändern Rastnasen, die in Aussparungen der Schachtwände einrasten, um den Kopfrahmen auf den Schachtwänden zu fixieren.

Die werkzeuglose Befestigung des Kopfrahmens auf der Oberseite der Schachtwände ist auch von einem ungeübten Monteur schnell und einfach auszuführen.

Nach einem weiteren Vorschlag der Erfindung besteht der Kopfrahmen aus einem plattenförmigen Abschnitt, der auf den Schachtwänden aufliegt, und einem in der Einbaulage nach oben abgewinkelten Schalungsabschnitt, der an der Innenseite der Schachtwände angeordnet wird. Der Schalungsabschnitt schließt zweckmäßigerweise im rechten Winkel an den plattenförmigen Abschnitt an. Mit dieser Ausbildung wird erreicht, dass zum Unterfüttern des auf ausgefahrenen Spindeln stehenden Stahlrahmen nur eine geringe Menge Vergussmörtel benötigt wird, da der auf den Kopfrahmen aufgebrachte dünnflüssige Mörtel nicht zur Innenseite des Schachtes abfließen kann. Diese vorteilhafte Wirkung kann auch dadurch erhöht werden, dass nach einem weiteren Vorschlag auch an der Außenseite der Schachtwand eine Schalungswand angebracht wird. Diese kann mit Clipsen an der Schachtwand befestigt werden, so dass die Außenschalung nach erfolgtem Verguss wieder abgenommen werden kann.

Am oberen Rand des Schalungsabschnitts des Kopfrahmens sind zweckmäßigerweise Ausschnitte ausgebildet, in die Verriegelungsbolzen des oder der Deckel eintreten können, um die Einbaulage der Deckel zu sichern. Diese Ausschnitte können durch aufgeschobene Verschlussplatten überdeckt werden, die einen unerwünschten Austritt von Vergussmörtel aus den Ausschnitten verhindern.

Außerdem wird vorgeschlagen, dass der Kopfrahmen vorzugsweise an jedem Eckbereich eine Einsenkung zur Aufnahme eines Auflageblechs aufweist, und dass in dem Stahlrahmen an entsprechenden Stellen die Spindeln angeordnet sind, die zum Höhenausgleich des Stahlrahmens auf das Umgebungsniveau ausfahrbar sind und sich dabei auf den Auflageblechen abstützen.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine perspektivische Ansicht eines kompletten Schachtes;
- Figur 2: zwei Darstellungen der Montage eines Kopfrahmens;
- Figur 3: ein Kopfrahmenteil mit Haken zur Positionierung und Rastnasen zur Fixierung;
- Figur 4: die Montage von Verschlussplatten;
- Figuren 5A bis 5D: Haken zur Positionierung des Kopfrahmens in einer perspektivischen Ansicht und bei der Befestigung des Kopfrahmens;
- Figur 6A und 6B: einen Vertikalschnitt durch den Kopfrahmen mit einer Rastnase vor und nach der Befestigung des Kopfrahmens;
- Figur 7: eine Schnittdarstellung des oberen Abschlusses eines Schachtes;
- Figuren 8A und 8B: die Montage der Endkappen und eine vergrößerte Darstellung einer solchen;
- Figur 9: die Anbringung einer Außenschalung am oberen Rand der Schachtwand.

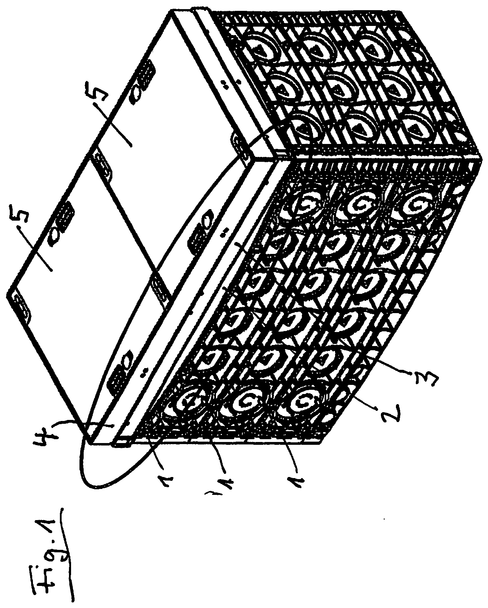

Figur 1 zeigt eine perspektivische Ansicht eines Schachtes, dessen Schachtwände aus drei aufeinandergesetzten Wandelementen 1 bestehen. Den oberen Abschluss des Schachtes bilden ein Kopfrahmen 2 und ein darüber angeordneter Stahlrahmen 3, auf dem ein umlaufender Flachstahl 4 befestigt ist, in dem zwei Schachtdeckel 5 bündig angeordnet sind.

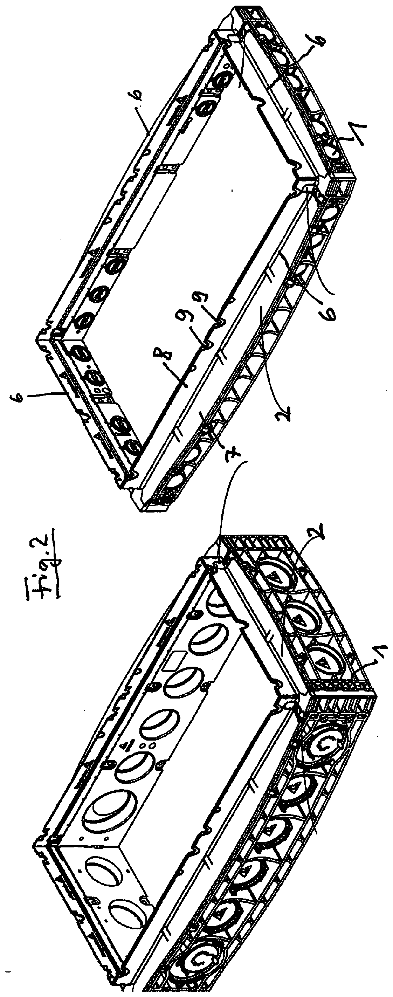

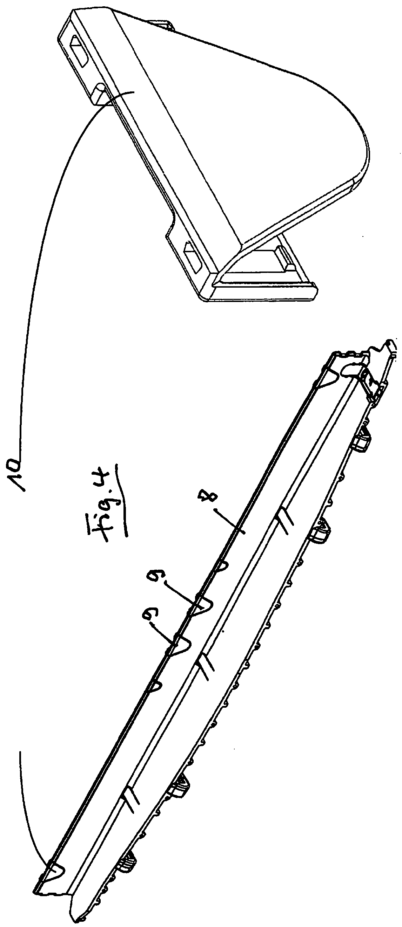

Figur 2 zeigt den vollständigen Kopfrahmen 2, der auf der Oberseite von zwei Wandelementen 1 unterschiedlicher Höhe befestigt ist. Der Kopfrahmen 2 besteht aus vier Kopfrahmenteilen 6, die an den Ecken des rechteckigen Schachtes zusammengefügt sind. Die Kopfrahmenteile 6 bestehen aus einem im wesentlichen plattenförmigen Abschnitt 7, der auf der zugehörigen Schachtwand aufliegt, und einem rechtwinklig nach oben abgewinkelten Schalungsabschnitt 8, der der Innenseite des Schachtes zugewandt ist. In dem oberen Randbereich der Schalungsabschnitte 8 sind Aussparungen 9 ausgebildet, in die nicht dargestellte Verrieglungsbolzen der Schachtdeckel eintreten können. Die Aussparungen 9 sind durch aufgesteckte Verschlussplatten 10 lösbar verschließbar, die in Figur 4 abgebildet sind.

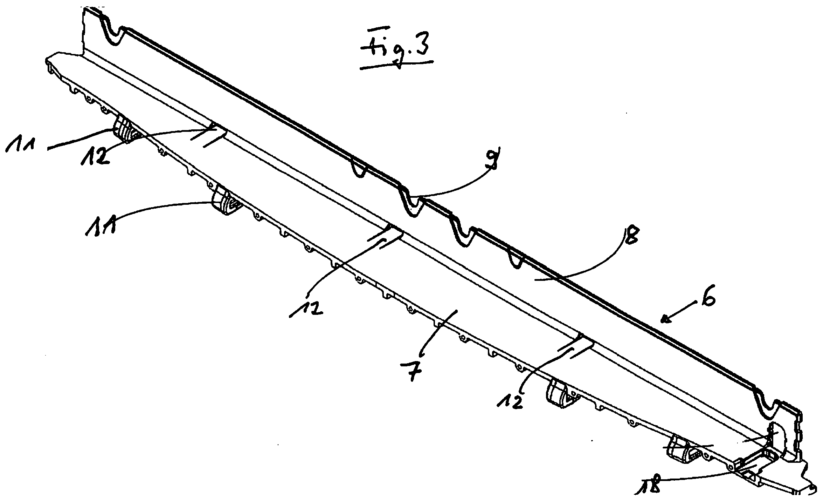

In Figur 3 ist ein Kopfrahmenteil 6 abgebildet, der ohne Zuhilfenahme von Werkzeugen auf der Oberseite einer Schachtwand befestigbar ist. Hierzu ist der Kopfrahmenteil 6 mit Haken 11 und Rastnasen 12 versehen. Die Haken 11 bilden Klemm-Mittel, die von der Außenseite des Schachtes aus in die Schachtwand eingeschoben werden, um den Kopfrahmenteil 6 zunächst korrekt auf der Oberseite der Schachtwand zu positionieren. Die Rastnasen 12 greifen an der Innenseite in Aussparungen der Schachtwand ein, wobei durch diese Verrastung des Kopfrahmenteils 6 bzw. der gesamte Kopfrahmen 2 unverschieblich auf der Schachtwand fixiert ist.

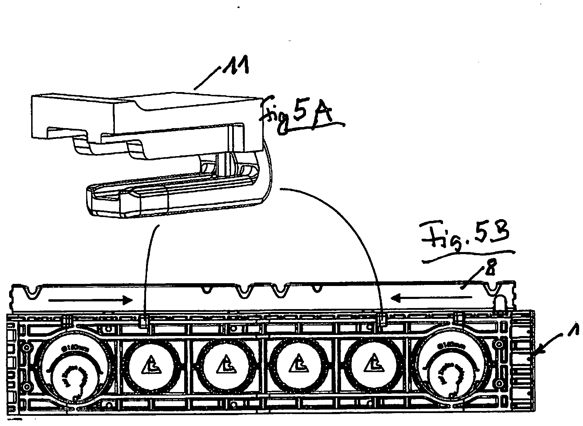

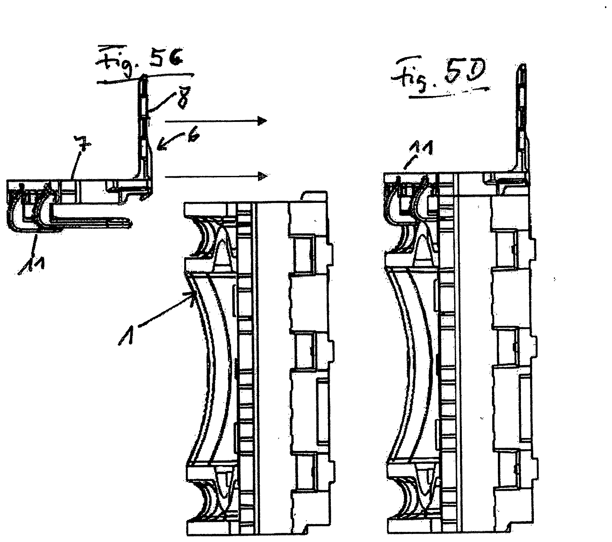

Figur 5 A zeigt eine perspektivische Ansicht eines Hakens 11. Die Figuren 5 C und 5 D stellen das Einschieben des mit dem Haken 11 versehenen Kopfrahmenteils 6 unter die obere Wand des Wandelements 1 zur Positionierung des Kopfrahmenteils 6 auf der Schachtwand dar. Figur 5B zeigt die Position zweier Haken 11 an der Schachtwand 1.

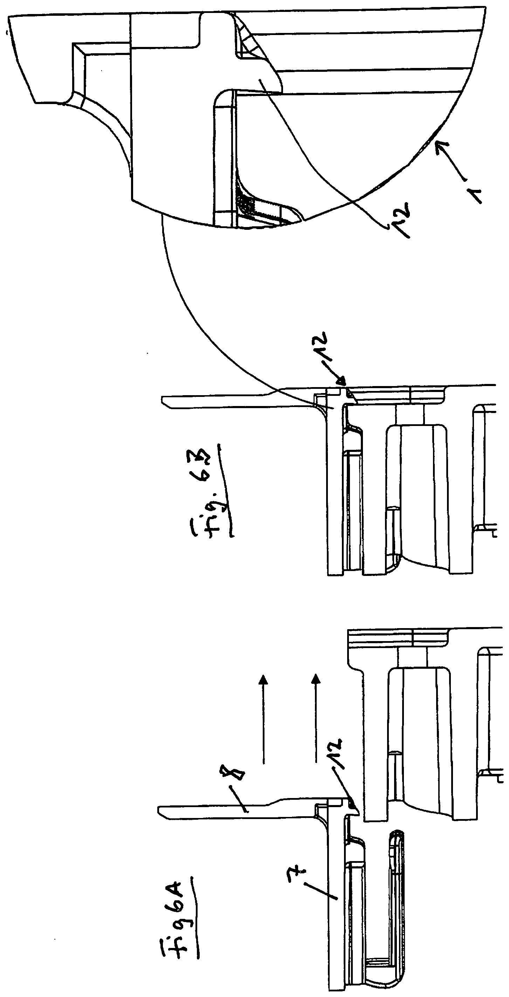

Figur 6 zeigt eine Rastnase 12 an der Unterseite des Kopfrahmenteils 6 an dessen inneren Randbereich. Wenn die Rastnase 12 in eine entsprechende Aussparung in der Oberseite des Wandelements 1 eingerastet ist, ist der Kopfrahmenteil 6 bzw. der gesamte, zusammengesetzte Kopfrahmen 2 auf der Oberseite des Wandelements 1 unverschieblich fixiert.

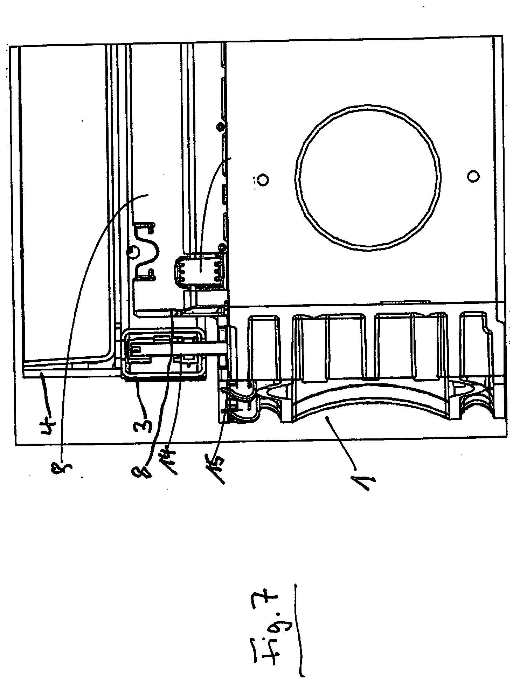

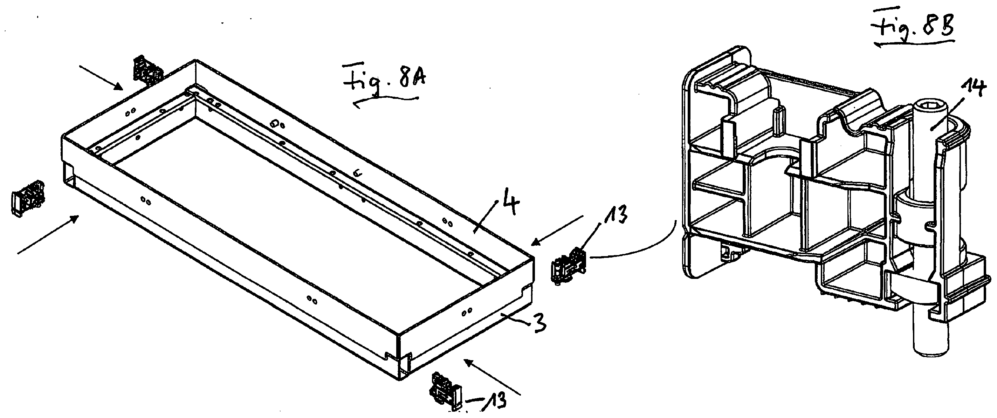

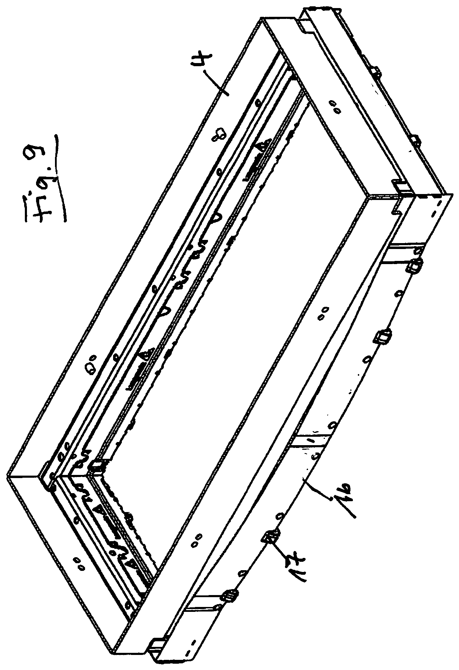

Figur 7 ist ein Vertikalschnitt durch den oberen Abschlussbereich des Schachtes. In den Stahlrahmen 3 ist an jedem Eckbereich eine Endkappe 13 eingesetzt, die eine nach unten ausfahrbare Spindel 14 enthält, die sich auf einem Auflageblech 15 aufstützt, wenn die Spindel 14 nach unten ausgefahren ist, um den Höhenausgleich hervorzurufen (Figuren 8A und 8B). Damit der auf vier Spindeln stehende Stahlrahmen 3 die erforderliche Stabilität erhält, muss der Stahlrahmen mit einem fließfähigen Mörtel unterfüttert werden, der den gesamten Freiraum unter dem Stahlrahmen 3 ausfüllt. Der innere Schalungsabschnitt 8 verhindert dabei, dass der flüssige Mörtel ins Innere des Schachtes abläuft. Um dies auch an der Außenseite des Schachtes zu vermeiden, wird an der Außenseite des Wandelements 1 eine umlaufende Außenschale 16 mit Clipsen 17 befestigt, wie Figur 9 zeigt.

## Patentansprüche

1. Rechteckiger Schacht, der aus mehreren aus Kunststoff bestehenden Schachtwänden (1) zusammengesetzt ist, wobei auf der Oberseite der Schachtwände ein Kopfrahmen aufliegt, und der obere Abschluss des Schachtes einen Stahlrahmen aufweist, auf dem ein oder mehrere Schachtdeckel angeordnet werden können,
**dadurch gekennzeichnet,**
**dass** der Kopfrahmen (2) aus mehreren Kopfrahmenteilen (6) zusammengesetzt ist,
**dass** der Stahlrahmen entweder direkt auf dem Kopfrahmen oder auf einer auf dem Kopfrahmen angeordneten, unterfütternden Mörtelschicht aufliegt, und
**dass** der Kopfrahmen durch Klemm-Mittel und/oder Rastmittel auf den Schachtwänden fixiert ist.

2. Schacht nach Anspruch 1,
**dadurch gekennzeichnet,**
**dass** die Kopfrahmenteile (6) an einem seitlichen Randabschnitt Haken (11) aufweisen, die in die Schachtwände (1) eingeschoben werden, um die Kopfrahmenteile (6) auf den Schachtwänden (1) zu positionieren.

3. Schacht nach einem der Ansprüche 1 oder 2,
**dadurch gekennzeichnet,**
**dass** die Kopfrahmenteile (6) an dem gegenüberliegenden seitlichen Rand Rastnasen (12) aufweisen, die in Aussparungen der Schachtwände (1) einrasten, um den Kopfrahmen (2) zu fixieren.

4. Schacht nach einem der Ansprüche 1 bis 3,
**dadurch gekennzeichnet,**
**dass** der Kopfrahmen (2) einen plattenförmigen Abschnitt (7), der auf den Schachtwänden (1) aufliegt, und einen in der Einbaulage nach oben abgewinkelten Schalungsabschnitt (8) aufweist, der in der Einbaulage an der Innenseite der Schachtwände (1) angeordnet ist.

5. Schacht nach einem der Ansprüche 1 bis 4,
**dadurch gekennzeichnet,**
**dass** der Kopfrahmen (2) vorzugsweise an jedem Eckbereich eine Aufnahme (18) für ein Auflageblech (15) aufweist, und
**dass** in dem Stahlrahmen (4) an entsprechenden Stellen Spindeln (14) angeordnet sind, die zum Höhenausgleich des Stahlrahmens (4) auf das Umgebungsniveau ausfahrbar sind und sich dabei auf den Auflageblechen abstützen.

6. Schacht nach einem der Ansprüche 4 oder 5,
**dadurch gekennzeichnet,**
**dass** am oberen Rand des Schalungsabschnitts (8) des Kopfrahmens (2) Ausschnitte (9) ausgebildet sind, die durch lösbar aufgeschobene Verschlussplatten (10) überdeckt sind.

7. Schacht nach einem der Ansprüche 1 bis 6,
**dadurch gekennzeichnet,**
**dass** eine umlaufende Außenschalung (16) mit Clipsen (17) an der Schachtwand (1) anbringbar ist.

## Claims

1. A rectangular shaft, which is composed of a plurality of shaft walls (1) consisting of plastic material, wherein resting on the upper side of the shaft walls there is a head frame and the upper end of the shaft has a steel frame, on which one or more shaft covers can be arranged, **characterised in that** the head frame (2) is composed of a plurality of head frame portions (6), that the steel frame rests either directly on the head frame or on a supporting mortar layer arranged on the head frame and that the head frame is fixed in position on the shaft walls by clamping means and/or locking means.

2. A shaft as claimed in Claim 1, **characterised in that** the head frame portions (6) have hooks (11) on a lateral edge section, which are pushed into the shaft walls (1) in order to position the head frame portions (6) on the shaft walls (1).

3. A shaft as claimed in one of Claims 1 or 2, **characterised in that** the head frame portions (6) have locking lugs (12) on the opposing lateral edge, which lock into openings in the shaft walls (1) in order to fix the head frame (2) in position.

4. A shaft as claimed in one of Claims 1 to 3, **characterised in that** the head frame (2) includes a plate-shaped section (7), which rests on the shaft walls (1), and a casing section (8) angled upwardly in the installed position, which is arranged on the inner side of the shaft walls (1) in the installed position.

5. A shaft as claimed in one of Claims 1 to 4, **characterised in that** the head frame (2) includes a mounting (18) for a support plate (15), preferably at each corner region, and that arranged in the steel frame (4) at appropriate positions there are spindles (14), which are extendible for adjusting the height of the steel frame (4) and are supported on the support plates.

6. A shaft as claimed in one of Claims 4 or 5, **characterised in that** formed at the upper edge of the casing section (8) of the head frame (2) there are notches (9), which are covered by detachably pushed on closure plates (10).

7. A shaft as claimed in one of Claims 1 to 6, **characterised in that** a peripheral outer casing (6) may be attached to the shaft wall (1) with clips (17).

## Revendications

1. Puits rectangulaire qui se compose de plusieurs parois de puits (1) en matière plastique, dans lequel un cadre de tête repose sur la face supérieure des parois de puits, et l'extrémité supérieure du puits présente un cadre en acier sur lequel peuvent être disposés un ou plusieurs couvercles de puits,
**caractérisé en ce**
**que** le cadre de tête (2) se compose de plusieurs parties de cadre de tête (6),
**que** le cadre en acier repose soit directement sur le cadre de tête, soit sur une couche de mortier de regarnissage disposée sur le cadre de tête, et
**que** le cadre de tête est fixé sur les parois de puits par des moyens de serrage et/ou des moyens d'encliquetage.

2. Puits selon la revendication 1,
**caractérisé en ce**
**que** les parties de cadre de tête (6) présentent, sur une section de bord latéral, des crochets (11) qui sont insérés dans les parois de puits (1) pour positionner les parties de cadre de tête (6) sur les parois de puits (1).

3. Puits selon l'une quelconque des revendications 1 ou 2,
**caractérisé en ce**
**que** les parties de cadre de tête (6) présentent sur le bord latéral opposé des ergots d'encliquetage (12) qui s'enclenchent dans des évidements des parois de puits (1) pour fixer le cadre de tête (2).

4. Puits selon l'une quelconque des revendications 1 à 3,
**caractérisé en ce**
**que** le cadre de tête (2) présente une section en forme de plaque (7), qui repose sur les parois de puits (1), et une section de coffrage (8) coudée vers le haut dans la position de montage, qui, dans la position de montage, est disposée sur la face intérieure des parois de puits (1).

5. Puits selon l'une quelconque des revendications 1 à 4,
**caractérisé en ce**
**que** le cadre de tête (2) présente de préférence sur chaque zone d'angle un logement (18) pour une tôle d'appui (15), et
**que** sont disposées, sur des emplacements correspondants dans le cadre en acier (4), des broches (14), qui peuvent être déployées jusqu'au niveau environnant pour compenser la hauteur du cadre en acier (4) et s'appuient ce faisant sur les tôles d'appui.

6. Puits selon l'une quelconque des revendications 4 ou 5,
**caractérisé en ce**
**que** sont réalisées, sur le bord supérieur de la section de coffrage (8) du cadre de tête (2), des découpes (9), qui sont recouvertes par des plaques de fermeture (10) enfilées de manière amovible.

7. Puits selon l'une quelconque des revendications 1 à 6,
**caractérisé en ce**
**qu'**un coffrage extérieur périphérique (16) peut être installé avec des clips (17) sur la paroi de puits (1) .
